# EUROPÄISCHE PATENTANMELDUNG

(11) **EP 0 749 005 A2**
(43) Veröffentlichungstag der Anmeldung: **18.12.1996**
(21) Anmeldenummer: 96108758.2
(22) Anmeldetag: 31.05.1996
(51) Int. Cl.: G01F 1/66

(54) **Schallwandler**

(30) Priorität: 12.06.1995 DE 29509574 U
(71) Anmelder: SIEMENS AKTIENGESELLSCHAFT, 80333 München (DE)
(72) Erfinder: Kroemer, Nils, 09337 Hohenstein-Ernstthal (DE)

(57) **Zusammenfassung**

Die Erfindung betrifft einen Schallwandler, insbesondere einen Ultraschallwandler, mit einem zylinderförmigen Gehäuse (1, 2), mit einer koaxial im Gehäuse angeordneten Piezoscheibe (3) und mit einer ersten Elektrode (4) und einer zweiten Elektrode (5), die flächenhaft im Bereich der Oberseite bzw. im Bereich der in die Schallausbreitungsrichtung zu einem Meßmedium weisenden Unterseite der Piezoscheibe (3) ausgebildet sind und in welche über Signalleitungen (6, 7) ein elektrisches Signal einkoppelbar ist. Erfindungsgemäß sind die Elektroden und die Signalleitungen elektrisch gegenüber Gehäuse und Meßmedium isoliert, wobei die Unterseite der Piezoscheibe (3) zur Schallübertragung akustisch mit einer Scheibe (8) aus elektrisch isolierendem Material gekoppelt ist, die unterhalb der zweiten Elektrode (5) angeordnet ist.

Die Erfindung wird angewandt bei Ultraschalldurchflußmessern.

## Beschreibung

Die Erfindung betrifft einen Schallwandler, insbesondere einen Ultraschallwandler, nach dem Oberbegriff des Anspruchs 1.

Aus der EP-PS 0 521 855 ist ein Ultraschalldurchflußmesser bekannt, der auf dem Laufzeit-Differenzmeßprinzip basiert. Er weist zwei Schallwandler auf, die durch eine elektronische Ansteuerschaltung aktiviert werden und sich alternierend durch ein Meßmedium, das durch ein Meßrohr fließt, Schallpulse zuschicken. Der eine Schallwandler wird dabei als Ultraschallsender, der andere als Ultraschallempfänger betrieben. Die gemessenen Größen sind die Schallaufzeiten stromaufwärts und stromabwärts. Die Differenz der Laufzeiten ist ein Maß für die Strömungsgeschwindigkeit. Unter Berücksichtigung der Geometrie des Meßrohrs wird der Volumenfluß berechnet, durch Integration über die Zeit das durchgeflossene Volumen. Über die Aufnahmevorrichtungen für die Schallwandler, die als Ultraschallsender oder -empfänger an das Meßrohr angebracht sind, sowie über den Aufbau der Schallwandler werden in dem obengenannten Dokument keine Angaben gemacht.

Aus der EP-PS 0 378 651 ist eine Anordnung zur Durchflußmessung mittels Ultraschallwellen bekannt, die zwei ringförmige Schallwandler aufweist, die koaxial an einem Meßrohr angebracht sind. Die Schallwandler bestehen im wesentlichen aus einem ringförmigen Piezokristall, der an seiner Ober- und Unterseite jeweils mit einer Elektrode versehen ist. Durch ein elektrisches Signal, das an die Elektroden angelegt wird, wird der Schallwandler zu einer radialen Schwingung angeregt. Auf der inneren, zylinderförmigen Umfangfläche des ringförmigen Piezokristalls ist eine Schutzschicht aufgebracht, die verhindern soll, daß der Piezokristall durch ein chemisch aggressives Medium angegriffen wird. Diese Schutzschicht kann je nach Art des chemisch aggressiven Mediums aus Metall, wie Gold, Silber oder Titan, oder auch aus Glas, Kunststoff, Keramik oder dergleichen bestehen. Die bekannte Anordnung hat den Nachteil, daß ein Schallwandler im Störfall nur mit großem Aufwand austauschbar ist, da das Meßrohr ausgebaut werden muß.

Aus dem DE-GM 94 06 896 ist ein Schallwandler bekannt, der vorteilhaft an einer Rohrwandung oder in einer Öffnung einer Rohrwandung montierbar und für hohe Drücke und hohe Temperaturen geeignet ist. In einem zylinderförmigen Gehäuse ist koaxial eine Piezoscheibe angeordnet, die an ihrer Oberseite und an ihrer in die Schallausbreitungsrichtung weisenden Unterseite eine erste und eine zweite Elektrode aufweist, an welchen ein elektrisches Signal anlegbar ist. Die zweite Elektrode wird durch den Boden des topf- oder zylinderförmigen Gehäuses aus Metall gebildet, der als Metallmembran ausgeführt ist. Flüssigkeiten oder Festkörper, mit denen der bekannte Schallwandler zur Messung physikalischer Größen oder Eigenschaften in Kontakt gebracht wird, sind häufig elektrisch leitfähig. Da die aktive Piezokeramik des Schallwandlers mit anderen Wandlerkomponenten, insbesondere dem metallischen Gehäuse, elektrisch verbunden ist, besteht in diesen Fällen eine galvanische Kopplung der Piezokeramik mit der Meßumgebung über das Schallausbreitungsmedium. In der Prozeßmeßtechnik, wo in komplexeren Systemen sehr viele Meßumformer, z. B. zur Ultraschalldurchfluß-, Niveau-, Druck- oder Temperaturmessung, eingesetzt werden, ist eine galvanische Kopplung der Komponenten über das Meßmedium von Nachteil, da sie zu Schwierigkeiten bei der Signalverarbeitung führen kann.

Der Erfindung liegt die Aufgabe zugrunde, einen Schallwandler, insbesondere einen Ultraschallwandler, mit einem topf- oder zylinderförmigen Gehäuse zu schaffen, bei dem die genannten Schwierigkeiten vermieden werden, ohne die akustischen Eigenschaften des Wandlers wesentlich zu beeinträchtigen.

Zur Lösung dieser Aufgabe weist der neue Schallwandler die in Anspruch 1 genannten Merkmale auf. In den Unteransprüchen sind vorteilhafte Weiterbildungen der Erfindung angegeben.

Die Erfindung hat den Vorteil, daß das aktive Wandlerelement, bestehend aus Piezokristall und jeweils einer Ansteuerelektrode auf seiner Ober- und Unterseite, auf einfache Weise gegenüber anderen konstruktiven Komponenten des Wandlers, dem Einbauort und gegenüber dem Schallausbreitungsmedium elektrisch isolierbar ist. Bei geeigneter Wahl des elektrisch isolierenden Materials ist der Schallwandler auch für hohe Einsatztemperaturen verwendbar und zudem kostengünstig fertigbar. Die maximal zulässige Temperatur wird dann insbesondere nicht durch den Aufbau des Schallwandlers und die verwendeten passiven Komponenten eingeschränkt. Mit einfachen Mitteln kann der Schallwandler robust gegenüber chemischen und mechanischen Einflüssen aufgebaut werden. Durch Festlegung der geometrischen Abmessungen der Isolierscheibe sowie durch Wahl des elektrisch isolierenden Materials können zudem ein hohes Schallübertragungsmaß und eine große Bandbreite erreicht werden. Zur Messung in Flüssigkeiten oder Festkörpern liegt der Frequenzbereich des Schallwandlers häufig oberhalb 500 kHz, vorzugsweise zwischen 1 und 10 MHz. Bei dem erfindungsgemäßen Schallwandler kann unmittelbar die Dickenschwingung der Piezokeramik genutzt werden. Wegen sehr kleiner Schwingungsamplituden ist eine ungestörte akustische Kopplung von Piezokeramik und Meßmedium wichtig für die Übertragung der Ultraschallsignale. Störungen, beispielsweise aufgrund mikroskopischer Lufteinschlüsse, können durch geeignete Wahl des Koppelschichtmaterials vermieden werden. Wenn mehrere Materialübergänge zwischen der aktiven Piezokeramik und dem Meßmedium angeordnet sind, z. B. zwischen Piezokeramik, Scheibe aus isolierendem Material und Boden des Wandlergehäuses, gilt dies entsprechend für jede einzelne Koppelschicht. Vorteilhaft werden hierzu Kleber, Öl oder Fett, vorzugsweise ein Gel auf Silikonbasis, verwendet. Wenn der Schallwandler leicht demontierbar sein soll, wird auf die Verwendung eines vernetzenden Materials oder Klebers verzichtet. Wenn die akustische Impedanz der Scheibe aus elektrisch isolierendem Material in der Größenordnung derjenigen der Piezoscheibe, vorzugsweise zwischen der akustischen Impedanz der Piezoscheibe und des Meßmediums, liegt, werden störende Reflexionen weitgehend vermieden und der Signalrauschabstand nicht beeinträchtigt. Vorteilhaft können für die Scheibe aus elektrisch isolierendem Material Keramik, Glas oder Glimmer verwendet werden, die sich durch einen geringen Temperaturgang bei den relevanten physikalischen Eigenschaften auszeichnen. Dadurch ist auch der Temperaturgang der Wandlereigenschaften entsprechend gering. Bei dem erfindungsgemäßen Schallwandler können auch mehrere aktive piezokeramische Scheiben in axialer Richtung durch Kleben oder Druck mechanisch zu einem Stapel miteinander verbunden werden. Dadurch ist die Auslenkung, vor allem im quasi-statischen Betrieb des Wandlers, zu erhöhen. Schallabsorbierende sowie mechanisch dämpfende Materialien können auf der Rückseite der Piezokeramik als sogenanntes Backing aufgebracht werden. Ein vorrangiges Ziel dabei ist, die Bandbreite des Schallwandlers durch die mechanische Bedämpfung der aktiven Piezoscheibe zu erhöhen. Dazu kann Epoxydharz oder Silikonmasse verwendet werden, das bzw. die mit Metalloxidpulver gefüllt ist. Zudem können Vorlaufkörper zwischen der Piezoscheibe und dem Meßmedium angeordnet werden, welche die thermische Entkopplung bei Hochtemperaturanwendungen sicherstellen oder das Schallfeld formen, indem sie z. B. den Schallstrahl fokussieren oder gegenüber der Wandlerachse ablenken. Bei der Schallfeldformung wird die Tatsache ausgenutzt, daß die Schallgeschwindigkeit im Vorlaufkörper verschieden von der Ausbreitungsgeschwindigkeit im Meßmedium ist.

Anhand der Zeichnungen, in denen Ausführungsbeispiele der Erfindung dargestellt sind, werden im folgenden die Erfindung sowie Ausgestaltungen und Vorteile näher erläutert.

Der besseren Anschaulichkeit wegen sind die Zeichnungen nicht maßstabsgetreu.

Es zeigen:
- Figur 1: einen Schallwandler mit einem topfförmigen Metallgehäuse,
- Figur 2: eine Draufsicht auf einen Schallwandler, dessen Piezokristall und dessen Scheibe aus elektrisch isolierendem Material voneinander abweichende Durchmesser aufweisen,
- Figur 3: eine Seitenansicht eines Schallwandlers mit gleichem Durchmesser der beiden Scheiben,
- Figur 4: eine Draufsicht auf den Schallwandler nach Figur 3 und
- Figur 5: einen Schallwandler mit einem zylinderförmigen Gehäuse ohne gesonderten Boden.

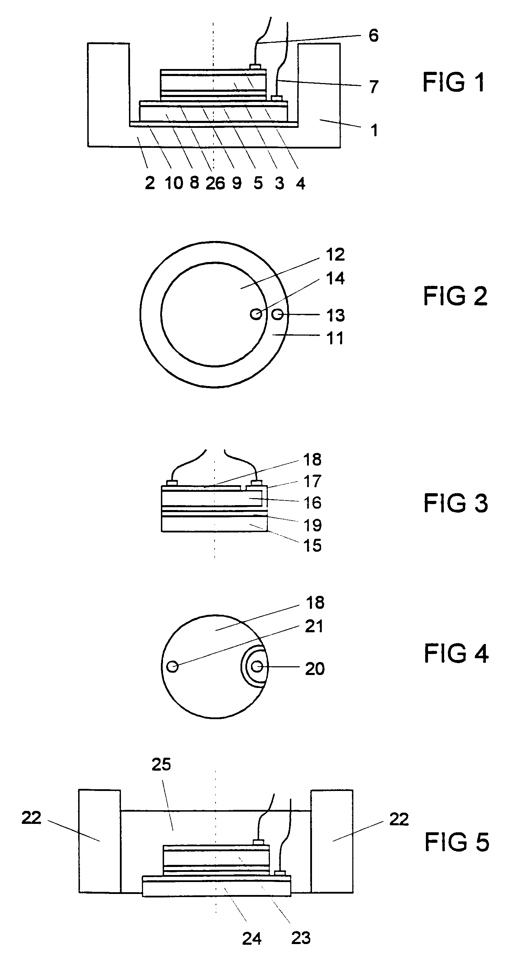

Ein Schallwandler ist gemäß der Schnittzeichnung in Figur 1 mit einem topfförmigen Gehäuse 1 und 2 aus Metall versehen. Die Form des Gehäuses kann auch als Hohlzylinder bezeichnet werden, dessen Unterseite durch einen Boden 2 verschlossen, dessen Oberseite aber offen ist. Eine Piezoscheibe 3 ist koaxial im Gehäuse 1 angeordnet und weist an ihrer Oberseite eine erste Elektrode 4 auf. Im Bereich der in die Schallausbreitungsrichtung weisenden Unterseite der Piezoscheibe 3 ist eine zweite Elektrode 5 angeordnet. In die beiden Elektroden 4 und 5 ist über Signalleitungen 6 bzw. 7 und über eine dritte Elektrode 26 ein elektrisches Signal von einer nicht dargestellten Ansteuerschaltung einkoppelbar, durch welches die Piezoscheibe 3 zu Schwingungen angeregt wird. Wenn der Schallwandler als Empfänger betrieben wird, kann an den Signalleitungen 6 und 7 ein elektrisches Signal abgegriffen werden, das in einer geeigneten Auswerteschaltung verarbeitet wird, um je nach Anwendung des Schallwandlers Rückschlüsse auf eine zu messende physikalische Größe zu ziehen. Die dritte Elektrode 26 befindet sich auf einer Scheibe 8 aus elektrisch isolierendem Material, deren Ränder über die Piezoscheibe 3 hinausragen, so daß beide Elektroden 4 und 26 von der Oberseite zugänglich sind und die Signalleitungen 6 und 7 einfach an die Elektroden 4 und 26 angeschlossen werden können. Zwischen der Piezoscheibe 3 und der Scheibe 8 aus elektrisch isolierendem Material befindet sich eine akustische Koppelschicht 9, die Schwingungen der Piezoscheibe 3 auf die Scheibe 8 und damit in die gewünschte Schallausbreitungsrichtung weiterleitet. Die Scheibe 8 aus elektrisch isolierendem Material ist durch eine weitere akustische Koppelschicht 10 an den Boden 2 des Gehäuses 1 angeschlossen. Der Schallwandler kann mit seiner Unterseite beispielsweise in eine geeignete Öffnung eines Meßrohres eingesetzt werden und Bestandteil eines Ultraschalldurchflußmessers sein. Für die Scheibe 8, die als elektrisches Isolier- und akustisches Übertragungselement dient, kann eine Keramik oder ein keramikartiges Material, beispielsweise Glas oder Glimmer, verwendet werden, welches unter der Piezokeramik in Schallausbreitungsrichtung so angeordnet ist, daß das Nutzsignal in einem weiten Temperaturbereich von etwa -40 bis +240 °C nicht beeinträchtigt wird gegenüber einer nicht isolierten Ausführung. Da die Scheibe 8 aus elektrisch isolierendem Material und die Piezoscheibe 3 unterschiedliche Durchmesser haben, unterscheiden sie sich bei sonst vergleichbaren akustischen Eigenschaften auch in der Radialresonanzfrequenz, so daß der Eintrag von radialen Störmoden in das Gehäuse des Schallwandlers bzw. in das Meßmedium minimiert wird. Durch diese Minimierung der Störmoden wird auch das Verhältnis von Nutz- zu Körperschallsignalen bei der Ultraschalldurchflußmessung verbessert. Dazu ist es auch vorteilhaft, wenn die akustische Impedanz der Scheibe 8 aus elektrisch isolierendem Material in der Größenordnung der akustischen Impedanz der Piezoscheibe 3 liegt. Vorteilhaft ist auch, wenn die akustische Impedanz der Scheibe 8 zwischen den akustischen Impedanzen der Piezoscheibe 3 einerseits und dem in Abstrahlrichtung angrenzenden Medium, hier dem Gehäuseboden 2, liegt, da so Reflexionen vermindert werden.

Die Piezoscheibe 3 kann an ihrer Unterseite mit einem Metallfilm als zweite Elektrode 5 beschichtet sein. In diesem Fall erfolgt die Signalkopplung von der dritten Elektrode 26 an die Piezokeramik 3 kapazitiv, durch ein elektrisch leitfähiges Koppelmedium oder durch Punktkontakt zwischen der leitfähigen Beschichtung der Piezoscheibe 3 und der dritten Elektrode 26.

Da der Durchmesser der Isolierscheibe 8 größer als der Durchmesser der Piezoscheibe 3 ist, wird in vorteilhafter Weise die mechanische Energie über die gesamte Fläche der Piezoscheibe 3 eingekoppelt.

In Figur 2 ist eine Draufsicht auf einen Schallwandler ohne Gehäuse dargestellt. Der Rand einer Scheibe 11 aus isolierendem Material ragt über eine Piezoscheibe 12 hinaus. Die Oberseiten der beiden Scheiben 11 und 12 sind jeweils mit einem Metallbelag beschichtet, die gemeinsam Elektroden für die Piezoscheibe 12 bilden. Beide Elektroden sind gut von der Oberseite her zugänglich, und an Kontaktstellen 13 bzw. 14 können leicht elektrische Leitungen zur Signalzuführung bei einem Ultraschallsender oder zum Signalabgriff bei einem Ultraschallempfänger angebracht werden.

Figur 3 zeigt eine Seitenansicht eines Schallwandlers, bei dem eine Scheibe 15 aus elektrisch isolierendem Material denselben Durchmesser aufweist wie eine Piezoscheibe 16. Damit die beiden Scheiben 15 und 16 eine voneinander abweichende Radialresonanzfrequenz aufweisen, sollte die Schallgeschwindigkeit in den beiden Materialien vorteilhaft unterschiedlich sein. Eine abstrahlseitige Elektrode 17 der Piezoscheibe 16 ist über den Rand auf die Oberseite geführt, so daß die Kontaktierung der Elektroden 17 und 18 ausschließlich von der Oberseite der Piezoscheibe 16 her erfolgt. Die beiden Scheiben 15 und 16 sind wiederum über eine Schicht 19 akustisch miteinander gekoppelt. Dieser Aufbau hat den Vorteil einer kompakten Bauweise mit dem Vorteil der Zugänglichkeit beider Elektroden von der Oberseite her vereint.

Figur 4 zeigt eine Draufsicht auf den Schallwandler nach Figur 3. Die Elektrode 18, die sich auf der Oberseite des Schallwandlers befindet, weist eine Aussparung für eine Kontaktstelle 20 der Elektrode 17 der Unterseite des Schallwandlers auf. Die Kontaktstelle 20 sowie eine Kontaktstelle 21 dienen zum Anschluß elektrischer Leitungen.

Anstatt die Elektrode 17 über den Rand auf die Oberseite der Piezoscheibe 16 zu führen, ist es auch möglich, in der Mitte der Piezoscheibe eine Durchkontaktierung und eine entsprechende Aussparung in der Elektrode der Oberseite vorzusehen. Durch den nun symmetrischen Aufbau wird das Schwingungsverhalten der Piezoscheibe vorteilhaft beeinflußt.

In einer weiteren, nicht dargestellten Variante ist der Durchmesser der Piezoscheibe größer als derjenige der Scheibe aus isolierendem Material. Hier ist die Möglichkeit der direkten Kontaktierung sowohl der Elektrode auf der Ober- wie auch der Elektrode auf der Unterseite von Vorteil. Allerdings tritt hier ein Verlust an mechanischer Energie auf, der durch überstehende Randflächen der Piezoscheibe bedingt ist.

Die Scheibe aus isolierendem Material kann auch eine von der Piezoscheibe abweichende Geometrie im Umfangsbereich besitzen, um die Einkopplung von Störmoden aufgrund einer Radialresonanz zu unterdrücken. Beispielsweise ist eine kegelstumpfförmige Geometrie oder eine Geometrie, die durch einen Polygonzug beschrieben werden kann, möglich.

Im Ausführungsbeispiel nach Figur 1 besteht das Gehäuse 1, 2 aus Metall. Wenn das Gehäuse selbst aus elektrisch isolierendem Material hergestellt wird, kann auf die Scheibe 8 aus elektrisch isolierendem Material verzichtet und eine Piezoscheibe ohne eine derartige Zwischenschicht mit dem Gehäuseboden akustisch gekoppelt werden. In diesem Fall stellt also der Gehäuseboden die Scheibe aus elektrisch isolierendem Material dar. Das ist ebenso möglich, wenn das Gehäuse als metallischer Hohlzylinder ohne Boden ausgebildet ist, in den eine Scheibe aus elektrisch isolierendem Material, beispielsweise Keramik, eingepaßt oder an der Grundfläche des hohlzylindrischen Gehäuses angeflanscht ist. Auch in dieser Ausführungsform ist die elektrische Isolierung der Elektroden gegenüber den metallischen Gehäuseteilen und dem Meßmedium durch die Scheibe aus elektrisch isolierendem Material gewährleistet. Neben Keramik können auch andere elektrisch isolierende Materialien mit vergleichbaren akustischen Übertragungseigenschaften, insbesondere geringer akustischer Dämpfung, sowie mit vergleichbaren thermischen Eigenschaften eingesetzt werden, beispielsweise Glas oder Glimmer.

Bei Verwendung eines Wandlergehäuses mit einer in Abstrahlrichtung angeordneten metallischen Bodenplatte erfolgt die akustische Kopplung zwischen der Isolierscheibe und der Bodenplatte vorteilhaft durch ein nicht vernetzendes Medium, also nicht durch Kleber, so daß der Verbund aus Piezo- und Isolierscheibe im Fehlerfall gewechselt werden kann, ohne das Wandlergehäuse auszubauen. Besonders vorteilhaft ist dies bei Durchflußmeßgeräten, da so ein Austausch eines defekten Wandlers vorgenommen werden kann, ohne daß dabei das Meßrohr geöffnet werden muß.

Ein für eine Montage an einer Wand eines Meßrohrs vorteilhaftes Ausführungsbeispiel der Erfindung ist ein Schallwandler gemäß Figur 5. Dort wird ein hohlzylinderförmiges Wandlergehäuse 22 ohne Bodenplatte verwendet. Ein Verbund aus einer Piezoscheibe 23 und einer Scheibe 24 aus elektrisch isolierendem Material ist mittels einer Vergußmasse 25, z. B. auf der Basis einer Hochtemperatur-Silikonmasse, innerhalb des hohlzylinderförmigen Gehäuses 22 fixiert. Vorzugsweise ist die Scheibe 24 aus elektrisch isolierendem Material gegenüber dem hohlzylinderförmigen Gehäuse 22 nach unten in Schallausbreitungsrichtung versetzt, so daß sie vor der Montage des Schallwandlers aus dem Hohlzylinder leicht hervorragt. Nach der Montage ist dadurch eine flächige Auflage und somit eine gute akustische Kopplung an der Wandung, beispielsweise eines Rohres, gewährleistet. Dieser Wandler ist auch für eine Montage in einer Öffnung eines Rohres geeignet, wenn eine gegen aggressive Medien resistente Vergußmasse verwendet wird.

Die Scheibe aus isolierendem Material kann an verschiedenen Stellen voneinander abweichende Dicken aufweisen. Beispielsweise kann der Verlauf der Unterseite der Isolierscheibe konkav sein, um fokussierende Eigenschaften zu erzielen, oder die Unterseite kann schräg zur Oberseite verlaufen, um einen von Null verschiedenen Winkel zwischen der Achse der Piezoscheibe und der Einschallrichtung in das Medium zu erreichen.

Bei einer Verklebung der Piezoscheibe und der Scheibe aus isolierendem Material liegt die Dicke der Klebeschicht vorzugsweise zwischen 10 und 100 µm. Wenn die Kontaktierung einer Elektrode auf der Unterseite der Piezoscheibe indirekt, z. B. über eine Metallisierung der Oberseite der Isolierscheibe, erfolgt, so wird vorteilhaft ein leitfähiger Kleber oder ein anderes elektrisches Verbindungsmittel verwendet, wobei der Gleichstromwiderstand durchaus hoch sein kann. Thermisch induzierte Ladungen sollten jedoch abgeleitet werden können. Für die elektrischen Signale an der Piezoscheibe genügt eine kapazitive Kopplung, wobei dann die Kapazität der Piezoscheibe erheblich kleiner als die Kapazität der elektrischen Verbindung sein muß. Für die akustische Kopplung der in Schallausbreitungsrichtung angeordneten Komponenten zwischen der Piezoscheibe und dem Meßmedium werden vorzugsweise nicht vernetzende Gele, z. B. auf Silikonbasis, verwendet, sofern keine Klebeverbindung erforderlich ist. Die Curie-Temperatur der Piezokeramik liegt oberhalb von 360 °C.

Es sollen nun noch einmal zusammenfassend die vorteilhaften Wirkungen der Erfindung angegeben werden:
Für den erfindungsgemäßen Schallwandler ergeben sich bessere Anwendungsbedingungen, da keine galvanische Kopplung zwischen Schallwandler und Meßumgebung und damit keine undefinierte galvanische Kopplung mehrerer Schallwandler oder Meßumformer in komplexen Anlagen existiert.
Der Schallwandler ist in einem großen Temperaturbereich einsetzbar, da die Temperaturbegrenzung letztlich durch die Piezoscheibe und nicht durch andere Komponenten des Schallwandlers bestimmt wird.
Im Schallwandler auftretende Störreflexionen werden minimiert, da keine nichtmonotone Änderung der akustischen Impedanz zwischen Piezoscheibe und Meßmedium oder Boden des Wandlertopfs erfolgt. Dadurch werden Übertragungsmaß und Pulsform eines Ultraschallsignals nur geringfügig beeinflußt und kaum gegenüber einer direkten Kopplung der Piezoscheibe an das Meßmedium bzw. den Topfboden verschlechtert.
Der Schallwandler zeichnet sich durch eine einfache Herstellung aus und bietet daher Kostenvorteile gegenüber bekannten Schallwandlern.
Bei der Verwendung von Keramik als elektrisch isolierendes Material der Isolierscheibe wird ein näherungsweise gleicher Temperaturgang der akustischen Eigenschaften von Piezoscheibe und Isolierscheibe für das Nutzsignal erreicht.
Da die Scheibe aus elektrisch isolierendem Material definierten mechanischen und elektrischen Bedingungen ausgesetzt ist, kann eine hohe Spannungsfestigkeit gewährleistet werden.

## Patentansprüche

1. Schallwandler, insbesondere Ultraschallwandler, mit einem zylinderförmigen Gehäuse (1, 2), mit einer im wesentlichen koaxial im Gehäuse angeordneten Piezoscheibe (3) und mit einer ersten Elektrode (4) und einer zweiten Elektrode (5), die flächenhaft im Bereich der Oberseite bzw. im Bereich der in die Schallausbreitungsrichtung zu einem Meßmedium weisenden Unterseite der Piezoscheibe (3) ausgebildet sind und in welche über Signalleitungen (6, 7) ein elektrisches Signal einkoppelbar ist,
**dadurch gekennzeichnet,**
daß die Elektroden (4, 5) und die Signalleitungen (6, 7) elektrisch gegenüber Gehäuse (1, 2) und Meßmedium isoliert sind, wobei die Unterseite der Piezoscheibe (3) zur Schallübertragung akustisch mit einer Scheibe (8) aus elektrisch isolierendem Material gekoppelt ist, die unterhalb der zweiten Elektrode (5) angeordnet ist.

2. Schallwandler nach Anspruch 1, **dadurch gekennzeichnet,** daß die akustische Kopplung über die zweite Elektrode (5) hinweg erfolgt.

3. Schallwandler nach Anspruch 2, **dadurch gekennzeichnet,** daß sich zwischen der zweiten Elektrode (5) und der Scheibe (8) aus elektrisch isolierendem Material eine akustische Koppelschicht (9) befindet, die aus Kleber, Öl, Fett oder einem Gel auf Silikonbasis besteht, deren Dicke zwischen 10 µm und 100 µm beträgt.

4. Schallwandler nach einem der vorhergehenden Ansprüche, **dadurch gekennzeichnet,** daß die akustische Impedanz der Scheibe (8) aus elektrisch isolierendem Material in der Größenordnung derjenigen der Piezoscheibe (3) liegt.

5. Schallwandler nach einem der vorhergehenden Ansprüche, **dadurch gekennzeichnet,** daß die Piezoscheibe (3) und die Scheibe (8) aus elektrisch isolierendem Material voneinander abweichende Radialresonanzfrequenzen aufweisen.

6. Schallwandler nach einem der vorhergehenden Ansprüche, **dadurch gekennzeichnet,**
- daß der Durchmesser der Scheibe (8) aus elektrisch isolierendem Material größer als der Durchmesser der Piezoscheibe (3) ist und
- daß die Scheibe (8) aus elektrisch isolierendem Material an ihrer Oberseite mit einer dritten Elektrode (26) versehen ist, die über den Rand der Piezoscheibe (3) hinausragt und an welche anstelle der zweiten Elektrode (5) über eine Signalleitung (7) das elektrische Signal anlegbar und in die zweite Elektrode (5) einkoppelbar ist.

7. Schallwandler nach einem der Ansprüche 1 bis 5, **dadurch gekennzeichnet,** daß die zweite Elektrode (17) über den Rand der Piezoscheibe (16) auf die Oberseite geführt ist, so daß auf der Oberseite an die erste Elektrode (18) und die zweite Elektrode (17) das elektrische Signal anlegbar ist.

8. Schallwandler nach einem der vorhergehenden Ansprüche, **dadurch** g**ekennzeichnet,** daß die Scheibe (8) aus elektrisch isolierendem Material aus Keramik, Glas oder Glimmer besteht.

9. Schallwandler nach einem der vorhergehenden Ansprüche, **dadurch gekennzeichnet,**
- daß die Scheibe aus elektrisch isolierendem Material und das zylinderförmige Gehäuse einteilig ausgebildet sind, aus demselben Material bestehen und
- daß die Scheibe die Bodenplatte des zylinderförmigen Gehäuses bildet.

10. Schallwandler nach einem der Ansprüche 1 bis 8, **dadurch gekennzeichnet,** daß das zylinderförmige Gehäuse (1, 2) aus Metall besteht, das gegenüber den Elektroden (4, 5) elektrisch isoliert ist.

11. Schallwandler nach Anspruch 10, **dadurch gekennzeichnet,** daß die Scheibe aus elektrisch isolierendem Material die Bodenplatte des zylinderförmigen Gehäuses bildet.

12. Schallwandler nach Anspruch 10, **dadurch gekennzeichnet,** daß das zylinderförmige Gehäuse (1, 2) eine Bodenplatte (2) aufweist, die mit der Scheibe (8) aus elektrisch isolierendem Material akustisch gekoppelt ist.

13. Schallwandler nach Anspruch 12, **dadurch gekennzeichnet,** daß die akustische Kopplung der Scheibe (8) aus elektrisch isolierendem Material und der Bodenplatte (2) durch ein nicht vernetzendes Mittel erreicht wird.

14. Schallwandler nach einem der Ansprüche 10 bis 13, **dadurch gekennzeichnet,** daß die Piezoscheibe (23) und die Scheibe (24) aus isolierendem Material in dem zylinderförmigen Gehäuse (22) durch eine Vergußmasse (25) fixiert sind.

15. Schallwandler nach einem der vorhergehenden Ansprüche, **dadurch gekennzeichnet,** daß das Dickenverhältnis von Piezoscheibe (3) und Scheibe (8) aus elektrisch isolierendem Material zwischen 1 und 10 liegt.

16. Schallwandler nach einem der vorhergehenden Ansprüche, **dadurch gekennzeichnet,** daß die Piezoscheibe (3) aus einer Keramik besteht, deren Curie-Temperatur größer als 360 °C ist.
